# EUROPEAN PATENT SPECIFICATION

(11) **EP 1 147 335 B1**
(45) Date of publication and mention of the grant of the patent: **04.02.2004**
(21) Application number: 99959667.9
(22) Date of filing: 25.11.1999
(51) Int. Cl.: F16L 23/032

(54) **FREE FLANGE**
LOSFLANSCH
BRIDE LIBRE

(43) Date of publication of application: 24.10.2001
(73) Proprietor: Fonderia Fazzini S.R.L., 21010 Cardano al Campo (IT)
(72) Inventor: FAZZINI, Fausto, I-21017 Samarate (IT)
(74) Representative: Pellegri, Alberto
(86) International application number: PCT/IT1999/000386
(87) International publication number: WO 2001/038772

(56) References cited:
- DE-A- 19 602 282
- US-A- 4 432 572
- US-A- 4 767 138
- US-A- 5 095 773

## Description

The present invention relates to lap joint flanges for connecting a flanged pipe of a pipeline.

In many cases, the leak proof lap joint connection of two pipe ends or of a pipe to a flanged or flared nipple of a fluid inlet or outlet or to other flanged components such as a valve, a pump and the like, is established by using so-called lap joint flanges or free flanges as an alternative to the use of connection flanges permanently welded at the end of the pipe.

This type of flanges also referred to as free or floating flanges are particularly suited for realizing pipelines and low pressure ductings for conveying fumes, gaseous mixtures, forced ventilation air, liquids, suspensions and other fluids, often made with relatively lightweight tubes of steel plate, corrugate steel plate, plastic material, fiber reinforced resins, vulcanized rubber and similar, though being usable and indeed used also for high pressure pipelines.

The use of lap joint or free flanges is particularly convenient in case of pipelines made of a relatively costly material such as for example stainless steel, titanium and the like, for requisites of corrosion resistance to the fluid passing in the tubes. This because the lap joint flanges, not being in direct contact with the fluid, may be made of a less costly material.

Generally, the lap joint flanges are slipped on the pipe, before welding a slip-on-welding collar at the ends of the pipe.

In these pipelines, the end "flange" of the pipes often consists of a relatively narrow, slip-on-welding collar of the same material of the pipe, welded at the end thereof.

In relatively low pressure conduits, made with thin walled tubes, the end flange of the tube may be produced by flaring the tube end by the use of appropriate tools, which produce a flaring and a final bending and flattening of the seal surface of such a end flange.

These welded collars or end flanges of the pipe or tube are not provided with holes, have a radial width that is relatively small and in many cases they may have an intrinsic rigidity that is insufficient to ensure a hydraulic seal of the flange against the gasket interposed between the end flange of the tube and the end flange of the other tube or of the connecting nipple. In these applications, the lap joint flange must take care of the insufficient sturdiness of the end flaring of the tube, beside providing for the anchoring of the bolts or tie rods used to tighten the joint.

Lap joint flanges may be made of the same material of the pipe, provided with a welded slip-on welding collar or flared at the end, on which they are slidably slipped on, but much more often they are made of a different material, typically less costly than the material of the pipe and with mechanical characteristics suitable to act as stress resistant elements, preferably formable in a mold and having appropriate dimensional stability and rigidity characteristics.

Exposure to outdoor climate, or resistance to corrosion in the peculiar environment of use are other cosiderations that orient the choice of the material of construction of lap joints flanges, as well as a recurrent requirement of minimizing weights.

Lap joint flanges are generally constituted by an annular body having a central hole of a size appropriate to permit to be slipped-on over the tube or pipe and of a plurality of holes for the stems of tightening bolts, e.g. see document DE-A-19602282.

An inner most portion of the annular body abuts against the end collar or flaring of the pipe pushing it against the interposed gasket and the coupling flange upon tightening the bolts or tie rods passing through the holes of the lap joint flange and of the coupling flange, which are uniformly spaced along a circumference external to the perimeter of the gasket and of the end collar or flared portion of the pipe.

Commonly, lap joint flanges are flat and may be provided with a cylindrical collar about the central hole of passage of the tube and have a certain number of holes for the passage of the stems of the tightening bolts or tie rods.

They are often fabricated by forging, or more frequently molded or cast in a mold.

Generally, forging as well as the molding techniques for fabricating lap joint flanges permit to obtain substantially finished products that do not require any further machining.

Rigidity is a prominent mechanical characteristic of a lap joint flange.

Specially in applications where the flange is called to provide rigidity to the gasketed joined because of intrinsic insufficient rigidity of the end flaring of the tube itself, a correct mechanical dimensioning of the lap joint flange becomes essential for maintaining a leak proof joint. Deflections under load must remain within very stringent limits in order to prevent leaks in critical zones, that are commonly identifiable at the middle of the distance of separation between adjacent holes of the flange.

Inner pressure tends to flex the end flaring of the tube or the collar welded at the end of the pipe at points farthest from the points in which the tightening forces are exerted by the bolts or tie rods passing through the holes of the lap joint flange.

There are optimization criteria for choosing between the option of increasing the number of holes (i.e. reducing the distance between adjacent bolts) and therefore the number of bolts or tie rods and the option of increasing the cross section of the lap joint flanges such to offer an increased rigidity and resistance to flexion while using a relatively reduced number of holes and bolts.

Vis-à-vis this state of the art, it has now been found a way to increase considerably rigidity and the ability of ensuring a leak proof seal without necessarily increasing markedly the thickness and the overall weight of a lap joint flange and therefore to allow for a more efficient optimization of the lap joints along a pipeline, even in terms of the number of bolts or tie rods for each joint.

This important result is achieved by a peculiar geometric configuration of the lap joint flange according to claim 1. Differently from the known configurations, the annular body of the flange is defined by an inner portion that is substantially flat and orthogonal to the axis of the annular body, such to define a substantially flat abutting face against the flared end of the tube or against a welded-on end collar, and by an outer portion, having holes for the passage of the stems of the tightening bolts of tie rods, with a truncated cone or truncated pyramidal shape.

The holes for the passage of the tightening bolts are formed through boss-like protrusions of a generally cylindrical shape, extending from the truncated conical or truncated pyramidal concave face of the outer portion of the flange body. These protrusions or bosses may be provided by suitably shaping the mold in which the flanges are formed or cast. The function of these cylindrical protrusions or bosses is on one side that of providing a flat end face orthogonal to the axis of the flange on which the tightening nut or the head of the tightening bolt may bear, as well as of improving stress distribution in the truncated cone or truncated pyramidal portion of the annular body of the flange.

In case of a truncated pyramidal shape, these boss-like protrusions through a central hole of which passes the stem of the tightening bolt are formed along the dihedral angles of the concave face of the truncated pyramidal portion of the annular body of the flange and contribute to stiffen the annular body of the flange as a whole.

It has been found that the truncated conical of truncated pyramidal shape of the outer portion of the lap joint flange on which the tightening force is exerted by the bolts, offer markedly improved characteristics of rigidity, intended as a reduced flexion (definable as the flexion of the outermost edge of the flange toward that of the other flange of the joint) for the same tightening load, compared to a substantially flat lap joint flange of similar thickness and/or weight of the prior art. These advantageous characteristics of enhanced rigidity permit a performance of the lap joint flange of the invention comparable with those of conventional flat flanges of greater thickness and weight, for the same material of construction.

The enhanced rigidity of the lap joint flange of the invention can be "spent" even for optimizing, for the same performance in ensuring a leak proof seal, the number of bolts of tie rods used for the joint.

Such an ability of maintaining a leakproof seal even with a relatively lesser number of tightening bolts, may be further enhanced by making the face of the relatively flat inner portion of the annular flange, that abuts against the flanged end of the pipe, with a circular undulation, the peaks of which coincide with the mid points of the circular sectors defined by the radiuses that intersect the axes of two adjacent holes for the tightening bolts and the valleys of which coincide with the radiuses intersecting the axes of the holes of the flange through which pass the stems of the tightening bolts. Such a slight circular undulation of the abutment surface of the flange does not have a constant amplitude along a radial direction.

Its amplitude is maximum near the outer perimeter of the abutment face of the flange and decreases progressively to become practically nil upon approaching the inner rim of the abutment face of the flange, that is the circumference of the central hole of the flange.

The effect of this slight circular undulation is to make more uniform the pressure exerted on the gasket upon tightening the joint, in practice compensating for a residual flexibility of the lap joint flange and avoiding an overloading of the gasket material in proximity of the tightening bolts as compared to the zones most remote therefrom. The circular undulation and its accentuation towards the outer portion of the abutment face of the flange produces an even squeezing of the gasket and ensure an enhanced leakproof sealing even under limit conditions of inner pressure.

**Figures 1, 2** and **3** are a plan view, a cross-section view and an enlarged view along section axes A and B of a four holes lap joint flange of the invention.

**Figures 4, 5** and **6** are a plan view, a cross-section view and an enlarged view along section axes A and B of a eight hole flange of the invention.

**Figures 7, 8** and **9** are a plan view, a cross-section view and an enlargement of a truncated pyramidal flange of the invention.

**Figure 10** is an exploded three-dimensional view of a pipe joint employing a pair of lap joint flanges of the invention.

The figures show embodiments of the lap joint flange of the invention. For ease of cross reference, the same functional parts are indicated with the same number of identification in all the figures.

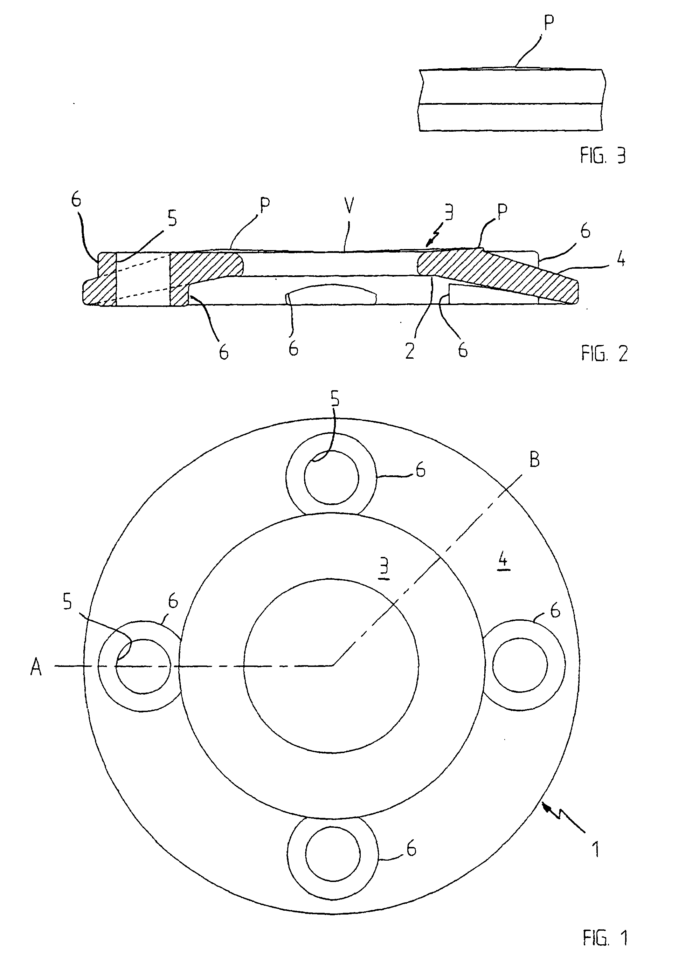

With reference to Figures 1, 2 and 3, a lap joint flange of the present invention is made by molding in a suitably shaped mold and may be fabricated by the molding process substantially without requiring any successive machining.

The annular body 1 of the flange is defined by an inner portion 2, substantially flat, defining an abutment face 3 against a welded end collar of a flared end of a pipe or tube that may be conventionally flat, or, most preferably, slightly undulated in a way that will be described with greater detail later, and an outer portion 4, which in the example shown has a truncated cone shape that merges with the inner flat portion 2 of the annular body.

Four holes 5 for the passage of the stems of tightening bolts or tie rods are present in the truncated cone portion of the flange body, each hole passing through generally cylindrical boss-like protrusions defined by the molding process of the annular body.

In the embodiments shown, the cylindrical bosses protrude besides from the concave face of the truncated cone portion of the body also from the convex face thereof, although their presence may be limited to the concave face, such to provide an appropriate surface, orthogonal to the axis of the flange, onto which the head of the bolt or the tightening nut may bear.

According to a preferred although ancillary aspect of the flange or the invention, the abutment face 3, normal to the axis of the flange being against a flared end of the tube or against a slip-on collar welded at the end of the pipe, is not perfectly flat, but has a slight circular undulation, the peaks of which, exaggeratedly depicted in Fig. 2 and indicated by the letter P, coincide with the mid position of the circular sector defined by two radiuses intersecting the axes of two adjacent holes of the flange (B in Fig. 1). The valleys V coincide with the radiuses intersecting the axes of the holes (A in Fig. 1).

The amplitude of the circular undulation, is not constant along a radial direction. The amplitude of the circular undulation is maximum in correspondence or near the outermost edge of the abutment face 3 of the flange and decreases progressively to become null before or about reaching the innermost edge or rim of the abutment face 3 of the flange. The amplitude of the undulation may become null at the innermost edge of the abutment face of the flange or in correspondence of an intermediate radius between the outermost radius and the innermost radius of the abutment face 3 of the flange.

In the detail view of Fig. 3, it may be observed the profile of the undulation in the vicinity of the axis B of Fig. 1 as seen by an observation point along the axis B itself.

Whether the flared end of the tube has scarce rigidity or the pipe has a welded end collar that is per se substantially rigid, the slight undulation of the abutment face 3 of the lap joint flange of the invention compensates the residual flexibility under stress of the flange body, that is the deflection between the tightening points, such to make as uniform as possible the compression of the elastic gasket of the lap joint.

It has been found that the amplitude H of the circular undulation of the abutment face 3 of the flange should satisfy, in a first approximation, the empiric relationship: H=K*P*D*L/(E*B), where K is a coefficient comprised between 25 and 120, P is the pressure of fluid in the pipe, D is the inner diameter of the lap joint flange, L is the distance between the axes of two adjacent holes of the flange, E is the coefficient of elasticity of the material of the annular body of the flange and B is the thickness of the flange in the flat portion thereof.

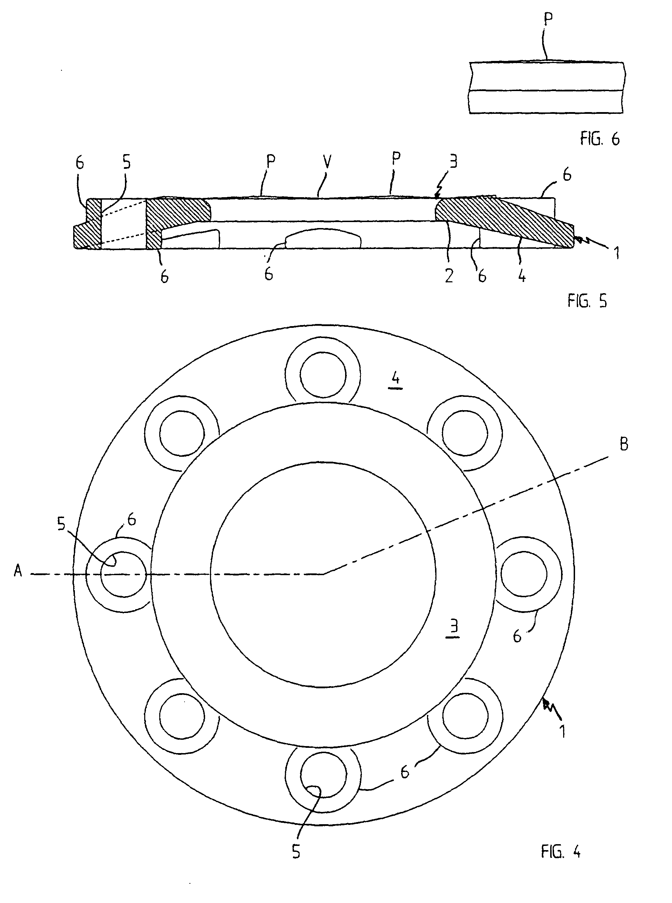

Figures 4, 5 and 6 show a different embodiment of the flange with eight holes.

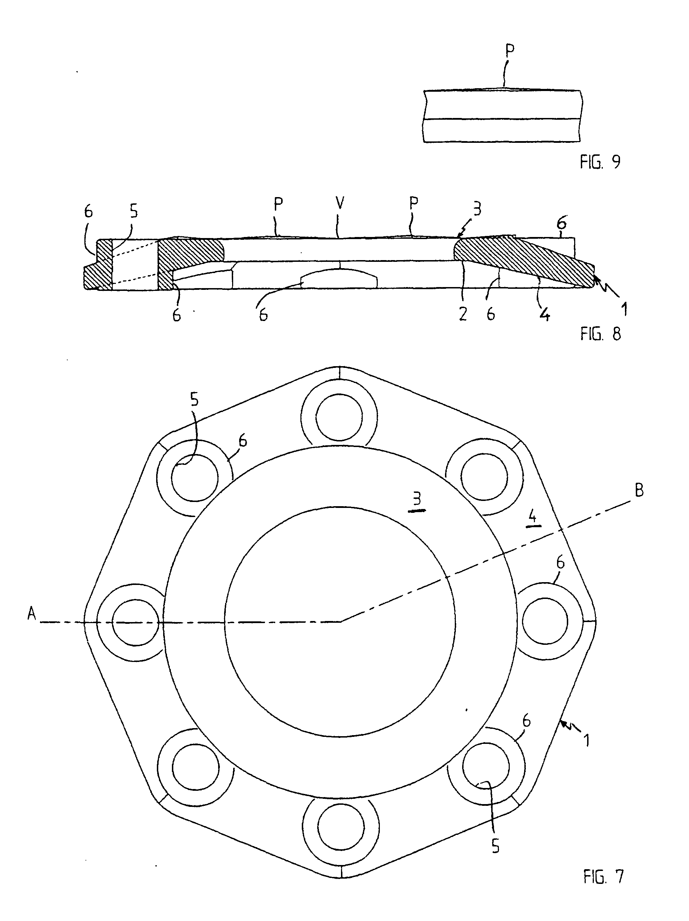

Figures 7, 8 and 9 show an alternative embodiment of the flange of the invention with eight holes, characterized by having an octagonal shape and by the fact that the outer portion 4 of the body of the flange, instead of having a truncated cone shape, has a truncated pyramidal shape. According to this alternative embodiment, the bosses 6 through which pass the holes for the stems of the tightening bolts are formed in coincidence of the eight dihedral angles of the truncated pyramidal portion of the annular body of the flange. This geometrical configuration has revealed to be extremely rigid, by virtue of the stiffening of the dihedral angles of the structure due to the presence of the cylindrical bosses along each dihedral angle.

Of course, it would be possible to form stiffening ribs of further reinforcement of the truncated conical or truncated pyramidal portion of the annular body of the flange of the invention, for example connecting adjacent cylindrical bosses.

Even in this case, the abutment face 3 of the flange I against the flared end of the tube or against the collar welded at the end of a pipe, may be advantageously provided with a circular undulation as described above. to improve the uniformity of compression of the gasket and promoting an enhanced ability to maintain the sealing even at limit conditions in term of internal pressure of the pipeline.

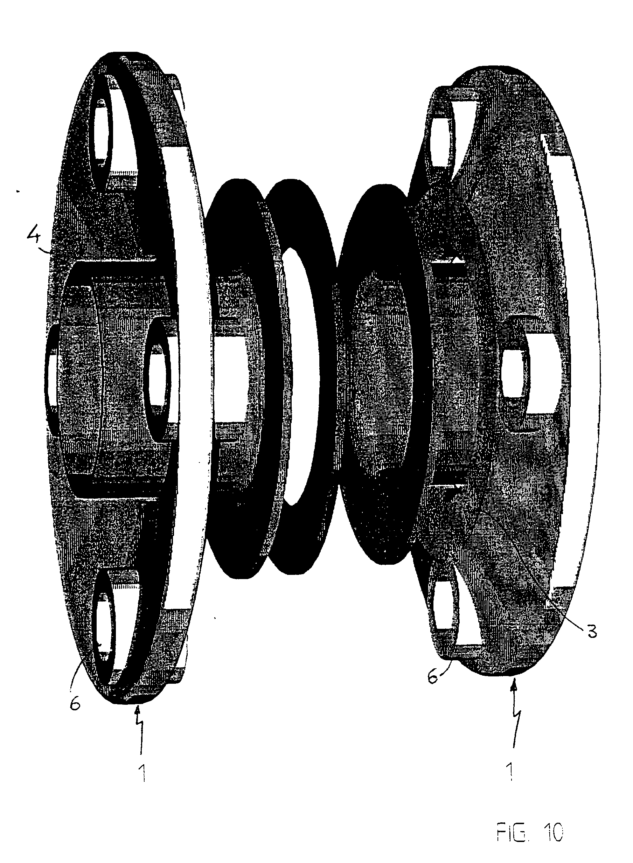

Fig. 10 is a perspective exploded view showing a typical joint between two pipes realized with two lap joint flanges of the invention.

The material of fabrication of the lap joint flanges of the invention may be of various kind, depending from the intended use and specifications.

The annular body 1 of the flange may be fabricated by casting in a mold or by hot forming steel, of cast-iron or of bronze by casting it in a mold, of aluminum or of an aluminum alloy, or of a thermosetting resin, unloaded or loaded with reinforcing fibers and/or powders, of a thermoplastic resin unloaded or loaded with reinforcement fibers, of titanium or of other materials suited for the intended use of the flanges. It is also possible to fabricate the annular body of the flange in a composite form, for example of a moldable plastic material incorporating metal inserts or reinforcing cores.

## Claims

1. A lap joint flange for joining a flanged tube or pipe composed in the form of an annular body (1) having a plurality of holes (5) slipped over a tube against a flanged end of the tube and tightened by a plurality of bolts, the stems of which pass through the holes (5) of the annular body (1), **characterized in that** said annular body (1) has an inner portion (2) substantially flat and orthogonal to the axis of the annular body (1) defining an abutment face (3) against the flanged end of the tube and a truncated conical or truncated pyramidal outer portion (4) having said plurality of holes (5) for the passage of the stems of the tightening bolts.

2. The lap joint flange according to claim 1, wherein each hole (5) for the passage of the stem of a tightening bolt passes through a boss-like cylindrical protrusion (6) present at least on the concave face of the truncated conical or truncated pyramidal outer portion (4).

3. The lap joint flange according to claim 1, wherein said annular body (1) has a polygonal outer perimeter and said truncated pyramidal oder portion (4) is crossed by holes (5) the axes of which intersect the dihedral angles of the truncated pyramidal outer portion (4) of the annular body (1).

4. The lap joint flange according to claim 1, wherein the abutment face (3) against the flanged end of the tube has a circular undulation, the peaks of which coincide with the mid points of the distance of separation between the axes of two adjacent holes (5) and the valleys of which coincide with the radiuses intersecting the axes of said holes (5), said circular undulation having an amplitude gradually decreasing along a radial direction from the outer perimeter of the abutment face (3) to the inner rim of the abutment face (3).

5. The lap joint flange according to claim 4, wherein the amplitude H of said undulation satisfies the following empirical relationship H=K*P*D*L/(E*B), where K is a coefficient comprised between 25 and 120, P is the internal pressure of the tube, D is the inner diameter of the annular flange, L is the linear distance between the axes of two adjacent holes (5) of the flange, E is the coefficient of elasticity of the material of the annular body (1) of the flange and B is the thickness of the flat inner portion (2) of the flange.

6. The lap joint flange according to any of the preceding claims, wherein said annular body (1) is of a material belonging to the group composed of cast-iron, bronze, steel, titanium, aluminum, aluminum alloys, thermosetting resins with and without reinforcement and thermoplastic resins with and without reinforcement.

## Patentansprüche

1. Überlappungsflansch zum Verbinden einer geflanschten Röhre oder eines geflanschten Rohrs, der in Form eines ringförmigen Körpers (1) mit mehreren Löchern (5) ausgebildet ist, der über eine Röhre gegen ein geflanschtes Ende der Röhre geschoben und durch mehrere Bolzen befestigt ist, wobei die Schäfte der Bolzen durch die Löcher (5) in dem ringförmigen Körper (1) verlaufen, **dadurch gekennzeichnet, dass** der ringförmige Körper (1) einen inneren Abschnitt (2) besitzt, der im Wesentlichen flach ist, zu der Achse des ringförmigen Körpers (1) senkrecht ist und eine Anschlagfläche (3) gegen das geflanschte Ende der Röhre definiert, und einen kegel- oder pyramidenstumpfförmigen äußeren Abschnitt (4) besitzt, der mehrere Löcher (5) für den Durchgang der Schäfte der Befestigungsbolzen besitzt.

2. Überlappungsflansch nach Anspruch 1, bei dem jedes Loch (5) für den Durchgang des Schafts eines Befestigungsbolzens durch einen höckerförmigen zylindrischen Vorsprung (6) verläuft, der wenigstens auf der konkaven Fläche des kegel- oder pyramidenstumpfförmigen äußeren Abschnitts (4) vorhanden ist.

3. Überlappungsflansch nach Anspruch 1, bei dem der ringförmige Körper (1) einen polygonförmigen äußeren Umfang besitzt und der pyramidenstumpfförmige äußere Abschnitt (4) von Löchern (5) durchlaufen ist, deren Achsen die Diederwinkel des pyramidenstumpfförmigen äußeren Abschnitts (4) des ringförmigen Körpers (1) schneiden.

4. Überlappungsflansche nach Anspruch 1, bei dem die Anschlagfläche (3) gegen das geflanschte Ende der Röhre eine kreisförmige Welligkeit besitzt, deren Spitzen mit den Mittelpunkten des Abstandes zusammenfällt, der die Achsen zweier benachbarter Löcher (5) trennt, und deren Täler mit den Radien zusammenfallen, die die Achsen der Löcher (5) schneiden, wobei die kreisförmige Welligkeit eine Amplitude besitzt, die in radialer Richtung vom äußeren Umfang der Anschlagfläche (3) zum inneren Rand der Anschlagfläche (3) allmählich abnimmt.

5. Überlappungsflansch nach Anspruch 4, bei dem die Amplitude H der Welligkeit die folgende empirische Beziehung erfüllt: H = K * P * D * L /(E * B), wobei K ein Koeffizient im Bereich von 25 bis 120 ist, P der Innendruck der Röhre ist, D der Innendurchmesser des ringförmigen Flansches ist, L der geradlinige Abstand zwischen den Achsen zweier benachbarter Löcher (5) des Flansches ist, E der Elastizitätskoeffizient des Materials des ringförmigen Körpers (1) des Flansches ist und B die Dicke des flachen inneren Abschnitts (2) des Flansches ist.

6. Überlappungsflansch nach einem der vorhergehenden Ansprüche, bei dem der ringförmige Körper (1) aus einem Material besteht, das zu der Gruppe gehört, die aus Gusseisen, Bronze, Stahl, Titan, Aluminium, Aluminiumlegierungen, wärmehärtende Harze mit und ohne Verstärkung und thermoplastische Harze mit und ohne Verstärkung gebildet ist.

## Revendications

1. Bride à joint à recouvrement pour relier un tube ou un tuyau à bride constituée d'un corps annulaire (1) ayant une pluralité de trous (5) monté coulissant sur un tube contre une extrémité à bride du tube et fixé par plusieurs vis, dont les tiges traversent les trous (5) du corps annulaire (1), **caractérisée en ce que** ledit corps annulaire (1) comprend une portion interne (2) sensiblement perpendiculaire à l'axe du corps annulaire (1) définissant une face de butée (3) contre l'extrémité à bride du tube et une portion externe en cône tronqué ou en pyramide tronquée (4) comportant ladite pluralité de trous (5) pour le passage des tiges des vis de tension.

2. Bride à joint à recouvrement selon la revendication 1, dans laquelle chaque trou (5) pour le passage de la tige d'une vis de tension traverse une protubérance (6) en forme de bosse cylindrique présente sur au moins la face concave de la portion externe (4) en cône tronqué ou en pyramide tronquée.

3. Bride à joint à recouvrement selon la revendication 1, dans laquelle ledit corps annulaire (1) a un périmètre extérieur polygonal et ladite portion externe en pyramide tronquée (4) est traversée par les trous (5) dont les axes coupent les angles dièdres de la portion externe en pyramide tronquée (4) du corps annulaire (1).

4. Bride à joint à recouvrement selon la revendication 1, dans laquelle la face de butée (3) contre l'extrémité à bride du tube comprend une ondulation circulaire, dont les pics coïncident avec les points milieu de la distance de séparation entre les axes de deux trous adjacents (5) et dont les vallées coïncident avec les rayons coupant les axes desdits trous (5), ladite ondulation circulaire ayant une amplitude décroissant graduellement selon une direction radiale depuis le périmètre extérieur de la face de butée (3) vers le bord intérieur de la face de butée (3).

5. Bride à joint à recouvrement selon la revendication 4, dans laquelle l'amplitude H de ladite ondulation satisfait la relation empirique suivante H = K * P * D * L / (E * B), où K est un coefficient compris entre 25 et 120, P est la pression interne du tube, D est le diamètre interne de la bride annulaire, L est la distance linéaire entre les axes de deux trous adjacents (5) de la bride, E est le coefficient d'élasticité du matériau du corps annulaire (1) de la bride et B est l'épaisseur de la portion interne plate (2) de la bride.

6. Bride à joint à recouvrement selon l'une quelconque des revendications précédentes, dans laquelle ledit corps annulaire (1) est constitué d'un matériau appartenant au groupe comprenant la fonte, le bronze, l'acier, le titane, l'aluminium, les alliages d'aluminium, les résines thermodurcissables avec et sans renforts et les résines thermoplastiques avec et sans renforts.
